# FASCICULE DE BREVET EUROPEEN

(11) **EP 1 604 597 B1**
(45) Date de publication et mention de la délivrance du brevet: **13.06.2007**
(21) Numéro de dépôt: 05356086.8
(22) Date de dépôt: 20.05.2005
(51) Int. Cl.: A47J 37/08

(54) **Grille-pain**
Brotroster
Toaster

(30) Priorité: 08.06.2004 FR 0406166
(43) Date de publication de la demande: 14.12.2005
(73) Titulaire: SEB S.A., 69130 Ecully (FR)
(72) Inventeur: Mangel, Christian, 88200 Saint Etienne Les Remiremont (FR); Averty, Lionel, 21000 Dijon (FR)
(74) Mandataire: Kiehl, Hubert

(56) Documents cités:
- WO-A-90/02301
- US-A- 4 446 846
- US-A- 5 333 540
- US-A- 5 522 306

## Description

L'invention concerne les appareils électriques de traitement thermique du pain de type grille-pain.

Les grille-pain actuellement commercialisés fonctionnent majoritairement de la manière suivante. Les tranches à griller sont introduites par le haut de l'appareil. L'utilisateur, après avoir réglé la puissance de chauffe, abaisse une manette qui a pour effet de descendre l'aliment disposé sur un chariot mobile dans la chambre de chauffe du grille-pain et de l'exposer à la chaleur de résistances chauffantes pendant un temps prédéterminé. A l'issue de cette phase l'appareil s'arrête automatiquement et les tranches grillées sont éjectées vers le haut lors de la remontée du chariot interne.

Ce type de fonctionnement présente de nombreuses difficultés techniques à résoudre :
- la puissance d'éjection doit être soigneusement calculée,
- les tranches peuvent rester bloquées dans le grille-pain,
- l'utilisateur est obligé de manipuler le pain chaud ou d'utiliser des outils pour l'extraire de l'appareil,
- il existe un risque de brûlure pour l'utilisateur lors de la récupération des tranches de pain.

Par ailleurs, compte tenu que les résistances restent chaudes durant les tentatives d'extraction de l'aliment, la cuisson se prolonge pendant cette période, ce qui présente évidemment un inconvénient supplémentaire.

Un grille-pain classique, à chargement et extraction du pain par le haut conserve généralement les miettes et débris calcinés à l'intérieur de l'appareil, lesdites miettes se rassemblent dans la partie basse et obligent l'utilisateur à les enlever assez fréquemment, cette opération de maintenance n'étant réalisable que lorsque les résistances chauffantes ont suffisamment refroidi.

Pour tenter de résoudre ces différents problèmes, bien connus de tous les utilisateurs, il a été proposé un grille-pain à chargement par le haut et extraction du pain au moyen d'une trappe latérale. Un tel appareil décrit dans le document US 5 522 306 résout plusieurs des problèmes du grille-pain à extraction des aliments grillés par le haut. Toutefois, le fonctionnement de ce dispositif n'est pas encore optimal notamment parce que la trappe d'extraction du pain nécessite un verrouillage manuel afin qu'un nouveau cycle de chauffe puisse recommencer et aussi parce que le mécanisme d'ouverture est compliqué, fragile et coûteux à fabriquer.

Il a été également proposé dans le passé des appareils à sortie directe des aliments grillés par le dessous, le pain étant introduit par le dessus du grille-pain. Après la période de chauffage l'ouverture d'une trappe située dans la partie inférieure permet l'extraction du pain sous l'action de la pesanteur. L'utilisateur en plaçant un récipient de récupération sous la trappe de sortie évite tout risque de brûlure et les manipulations délicates à proximité des résistances chaudes. Par ailleurs, les tranches ne stationnent pas plus que souhaité à la température de cuisson et le grillage est donc optimal et correspond à celui souhaité. Les miettes et résidus carbonisés sont évacués à chaque ouverture de la trappe ce qui évite ainsi les opérations de maintenance.

Les avantages d'un tel appareil sont donc nombreux et constituent une amélioration significative de l'art antérieur pour les utilisateurs.

Le principe fonctionnel de ce dispositif permettant la récupération des aliments grillés par le dessous du grille-pain est plus efficace, mais cette configuration nécessite de surélever le corps de l'appareil au moyen de pieds afin que la trappe de sortie de l'aliment puisse s'ouvrir et que la récupération des tranches de pain par l'utilisateur soit aisée. En pratique le grille-pain est surélevé d'environ sa hauteur, ce qui conduit à un problème d'encombrement critique pour le rangement de l'ensemble chez l'utilisateur et à des coûts de transport et de stockage plus élevés le long de la chaîne logistique pour la mise en vente de l'appareil.

L'invention a donc pour objectif de résoudre ces principales difficultés en proposant un grille-pain à sortie des aliments grillés par le bas limitant l'encombrement de l'appareil au volume d'un grille-pain habituel et cela au moyen d'un dispositif fonctionnel simple, fiable et peu coûteux à fabriquer.

La présente invention est atteinte à l'aide d'un grille-pain comprenant un boîtier, ledit boîtier contenant un bâti formant notamment une chambre de grillage verticale, ladite chambre et ledit boîtier étant ouverts, d'une part dans la partie supérieure du grille-pain, et d'autre part dans la partie inférieure du grille-pain, l'ouverture inférieure du bâti étant obturée par une trappe escamotable, ladite chambre étant munie de moyens de chauffe reliés à un dispositif d'alimentation électrique et de contrôle desdits moyens de chauffe permettant de réaliser un cycle de chauffe, la trappe pouvant être actionnée afin d'évacuer les tranches de pain mises à griller par le bas du grille-pain, ledit grille-pain comportant des pieds reliés au boîtier du grille-pain, caractérisé en ce que ces pieds sont montés pivotant dans un plan vertical par des articulations, afin de pouvoir occuper deux positions stables : une position dépliée de fonctionnement et une position repliée de rangement, les pieds étant rabattus contre le boîtier en position de rangement et disposant d'au moins un système de verrouillage empêchant la rotation accidentelle des pieds lorsque le grille-pain est en position dépliée, prêt à fonctionner.

Les avantages de pieds repliables configurés selon l'invention sont multiples, l'invention permet de résoudre les problèmes identifiés dans l'art antérieur pour le fonctionnement du grille-pain à sortie des aliments grillés par le bas.

En effet, la rotation des pieds est très facile à réaliser et ne prend que très peu de temps. De plus, le grille-pain garde une forme compacte par le positionnement replié des pieds contre le boîtier du grille-pain, ce dernier pouvant alors être rangé sans perte d'espace.

Par ailleurs, en proposant un verrouillage des pieds lorsque ces derniers sont en position dépliée, on garantit la tenue mécanique en élévation de la chambre de chauffe.

Avantageusement, les pieds pivotent vers l'extérieur du grille-pain, ce qui facilite la manipulation des pieds lors de l'opération de rotation.

Dans un souci de conserver une compacité maximale au grille-pain dans sa position repliée, tout en offrant une élévation importante de la chambre de chauffe lors de l'utilisation, le passage de la configuration dépliée de fonctionnement à la configuration repliée de rangement est effectué par une rotation des pieds voisine de 180°.

Avantageusement, le système de verrouillage, en position dépliée, d'au moins un pied est incorporé dans l'articulation dudit pied.

Selon un mode préféré de réalisation de l'invention, chaque pied est constitué de trois parties : une articulation, une jambe, et une assise.

L'assise du grille-pain, qui est large et bien équilibrée, coopère avec le moyen de verrouillage pour sécuriser les pieds en position dépliée pour le fonctionnement de l'appareil en évitant tout repliement accidentel de l'ensemble.

Du fait d'un mécanisme simple, sans ressort de rappel pour l'ouverture ou la fermeture des pieds, la fiabilité de fonctionnement est grande, le surcoût de tels pieds à placer sur un grille-pain à sortie des aliments grillés par le bas est très réduit, ce qui permet d'accéder pleinement à ce dispositif de fonctionnalité améliorée pour les utilisateurs.

Avantageusement, les assises des pieds sont rabattues sur le dessus de l'appareil en position de rangement. Cette disposition permet de concevoir des pieds de forme plus évasée pour conférer une plus grande stabilité au grille-pain en position de fonctionnement, et ce, sans augmenter considérablement l'encombrement de l'appareil en position de rangement.

Avantageusement, le grille-pain comporte quatre pieds reliés deux à deux par un élément de liaison de manière à former deux ensembles de pieds pivotants, réduisant les opérations de rotation des pieds et procurant plus de rigidité et donc plus de stabilité à l'ensemble lorsque les pieds sont dépliés.

Selon une mise en oeuvre préférée de l'invention, le grille-pain comporte un bouton de commande de l'alimentation électrique des éléments chauffants, l'une des parties constitutives d'au moins l'un des pieds ou l'un des ensembles de pieds étant conformé pour interdire la commande de fonctionnement du grille-pain lorsque celui-ci est en configuration repliée de rangement.

Ce dispositif constitue une sécurité supplémentaire qui interdit donc l'utilisation du grille-pain lorsque les pieds sont repliés.

L'une des mises en application de ce principe consiste à ce que le bouton de commande comporte une course d'actionnement, au bout de laquelle il commande l'alimentation des éléments chauffants, et en ce que l'une des parties constitutives d'au moins l'un des pieds ou l'un des ensembles de pieds vient empêcher la course complète du bouton lorsque le grille-pain est en configuration repliée de rangement. Cette solution mécanique simple est peu coûteuse et fiable dans le temps.

Avantageusement, le bouton est monté sur la face supérieure du boîtier, l'élément de liaison de l'un des ensembles de pieds pivotants étant conformé pour venir se positionner sur la course du bouton de commande lorsque le grille-pain est en configuration repliée de rangement.

Avantageusement, le grille-pain comprend en outre un moyen de verrouillage des pieds ou ensembles de pieds lorsque ces derniers sont en position repliée de rangement, évitant un dépliement intempestif des pieds. Ce moyen de verrouillage est de préférence incorporé dans l'articulation correspondante.

Afin de faciliter l'actionnement des pieds ou des ensembles de pieds, avantageusement, au moins une articulation possède une languette souple de déverrouillage reliée à un ergot de verrouillage actionnable par pression et porté par une jambe.

Selon une variante complémentaire de réalisation, les pieds repliables comprennent un élément de liaison, entre deux pieds formant un ensemble, conformé pour protéger les organes de contrôle du grille-pain lorsque celui-ci est en position repliée de rangement.

D'autres caractéristiques et avantages de l'invention se dégageront de la description qui va suivre en regard des dessins annexés qui ne sont donnés qu'à titre d'exemples non limitatifs.

Selon un exemple avantageux de réalisation de l'invention un grille-pain à sortie des aliments grillés par le bas et disposant de pieds repliables est illustré sur les différentes figures 1 à 7.

La figure 1 est une vue en perspective et en élévation d'un grille-pain à sortie des aliments grillés par le bas supporté par des pieds repliables selon l'invention.

La figure 2 est une vue de dessus du grille-pain dans sa configuration de rangement, les pieds étant repliés sur le dessus de l'appareil.

La figure 3 illustre le grille-pain en configuration repliée suivant une vue en perspective et en élévation.

La figure 4 est une vue en perspective et de dessous d'un grille-pain avec un ensemble de deux pieds détachés.

La figure 5 est une vue partielle en perspective de la figure 4 qui illustre les organes de pivotement des pieds et la contrepartie sur la coque du grille-pain.

Les figures 6 et 7 présentent des variantes de réalisation des organes de pivotement des pieds.

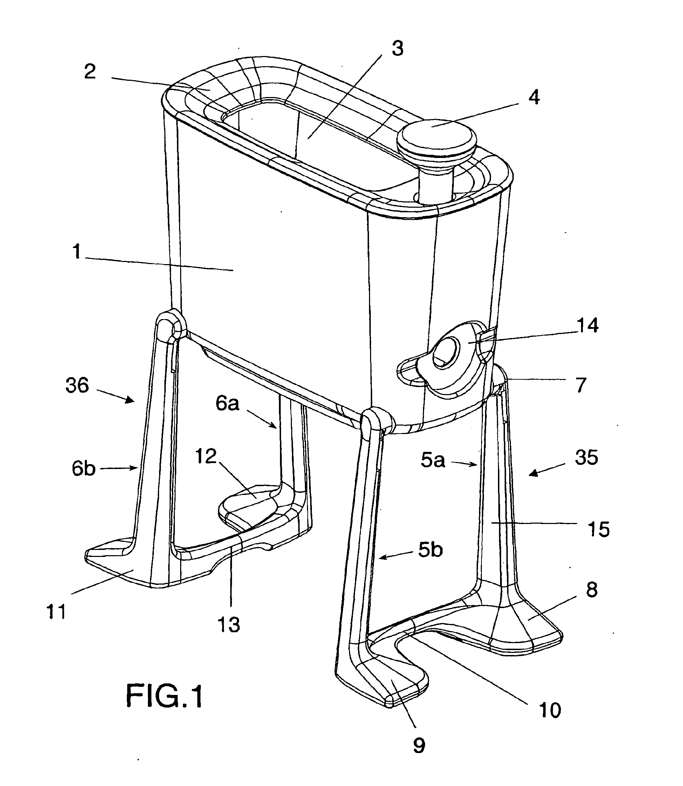

Comme le montre la figure 1, le grille-pain possède un boîtier 1, se présentant sous la forme d'une coque externe, un toit 2 dans lequel est ménagée une ouverture 3 permettant l'introduction des tranches de pain à griller et dont les dimensions optimales sont calculées pour éviter que le pain reste coincé dans l'appareil.

Le grille-pain dispose également d'un bouton de commande 4 actionnant un mécanisme déclenchant un cycle de grillage et d'éjection des tranches de pain, ce bouton remontant automatiquement en fin de cuisson lors de l'éjection des tranches. Le grille-pain possède également un bouton de réglage de puissance, ou/et des organes de contrôle, non représenté, localisé en 14 sur la figure 1, et deux ensembles 35 et 36 de deux pieds (5a, 5b, 6a, 6b) repliables au moyen des quatre articulations 7 placées sur les quatre coins inférieurs de la coque de l'appareil.

Les articulations possèdent un axe de rotation perpendiculaire aux pieds. Les axes de rotation des articulations sont horizontaux lorsque le grille-pain est positionné sur un plan de travail, et sont avantageusement perpendiculaires aux faces longitudinales du grille-pain, permettant ainsi une rotation des pieds sensiblement parallèle aux dites faces longitudinales du grille-pain.

Les ensembles de pieds 35 et 36 sont constitués par les quatre assises 8, 9, 11 et 12, avantageusement symétriques et identiques, des jambes 15 et les quatre articulations 7.

Dans la représentation préférée de l'invention les quatre articulations 7 sont identiques de même que les jambes 15.

De préférence les pieds (5a, 5b, 6a, 6b) sont reliés deux à deux par des éléments de liaison 10 et 13, l'élément de liaison 10 reliant les assises 8 et 9 et l'élément 13 reliant les assises 11 et 12. Les assises sont suffisamment larges, avec une partie inférieure plane, pour donner une stabilité élevée au grille-pain et éviter tout basculement lors de son utilisation.

Les éléments de liaison 10 et 13 permettent de faire pivoter ensemble les pieds autour des quatre articulations 7 identiques, en deux ensembles rigides, rendant ainsi plus aisées les opérations de repliement du grille-pain dans la configuration de rangement et d'ouverture dans la configuration de fonctionnement. D'un point de vue mécanique les articulations 7 sont ainsi sollicitées favorablement sans risque de torsion.

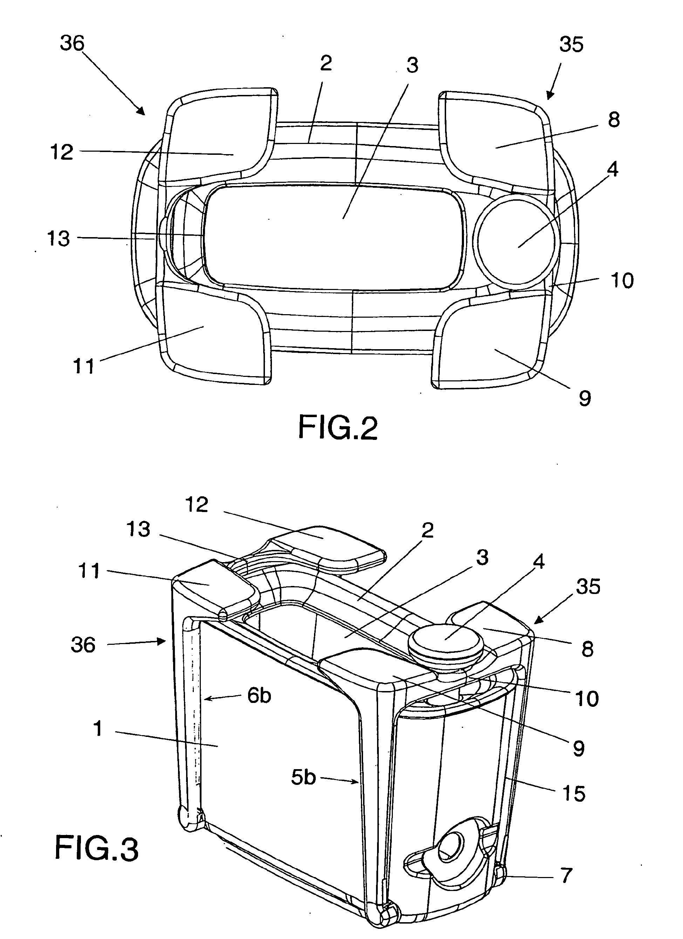

La figure 2 illustre la configuration de rangement du grille-pain après le repliement des deux ensembles de pieds 35 et 36 à environ 180° par rotation vers l'extérieur du grille-pain. Les assises 8, 9, 11 et 12 sont placées au-dessus du toit 2, à proximité immédiate de ce dernier. Tel qu'il est bien visible figure 2, les pieds s'intègrent sensiblement dans le volume supérieur du grille-pain, augmentant peu l'encombrement du grille-pain.

Par ailleurs, le repliement de l'ensemble des pieds 35 permet à l'élément de liaison 10 de bloquer le bouton de commande 4, empêchant ainsi l'alimentation des éléments chauffants, donc le fonctionnement du grille-pain.

La figure 3 en perspective permet de mieux comprendre le mécanisme de verrouillage du bouton de commande 4 du grille-pain après la rotation de l'ensemble de pieds 35 et le positionnement de l'élément de liaison 10 entre ledit bouton de commande 4 et le toit 2 du grille-pain.

Avantageusement cet élément de liaison 10 est conformé en contrepartie du bouton de commande 4. Si ledit bouton est de forme globalement ovoïde la contrepartie de l'élément de liaison 10 sera globalement concave.

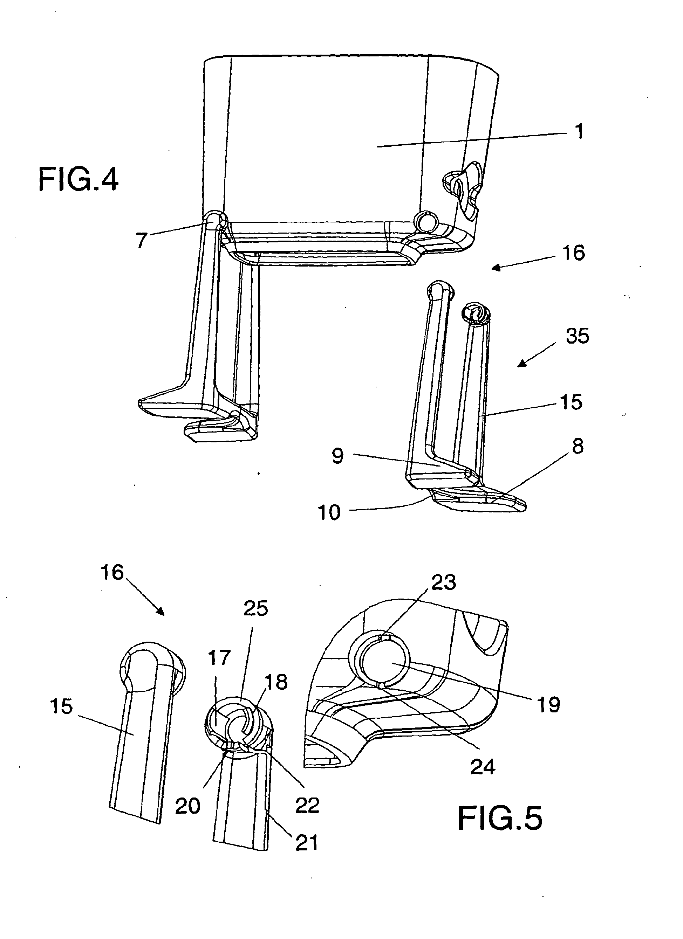

Le mécanisme de rotation et de verrouillage des pieds au moyen des articulations 7 est mieux compris à l'aide des figures 4 et 5.

La figure 4 illustre l'ensemble de pieds 35 décroché du boîtier 1 du grille-pain et constitué par les assises 8 et 9 reliées par l'élément de liaison 10, des jambes 15 qui relient les pieds à l'articulation 7, laquelle articulation 7 est illustrée en représentation éclatée 16.

L'illustration de la figure 5, permet de comprendre le mécanisme de fonctionnement de l'articulation 7.

Plus précisément, la partie de l'articulation portée par la jambe 15 comporte le cylindre 25 prolongé par des clips de verrouillage 17 et 18, lesquels clips sont destinés à être introduits dans l'évidemment 19 formant contrepartie sur la coque du grille-pain.

Le cylindre 25 porteur des clips de verrouillage 17 et 18 est coupé dans sa partie basse pour le placement d'un ergot de verrouillage 20 qui permet le blocage des pieds dans les deux positions extrêmes de rotation, à savoir soit la position repliée de rangement, soit la position dépliée de fonctionnement.

Les formes des clips de verrouillage 17 et 18 et de l'ergot de verrouillage 20 sont des portions de cylindre afin que la rotation des pieds soit optimale.

Ledit ergot de verrouillage 20 est porté par une languette souple de déverrouillage 21 actionnable par simple pression entre le pouce et l'index de l'utilisateur pour réaliser le déblocage des pieds. Cette languette souple est solidaire de la jambe 15 et positionnée dans sa partie supérieure et avantageusement à l'intérieur du pied, sur la face en regard avec le pied symétrique par rapport au plan du grille-pain.

Afin que la languette souple puisse être actionnée un évidemment 22 est aménagé dans la partie supérieure de la jambe 15. Toute pression sur la languette produit un déplacement simultané de l'ergot de verrouillage 20 ayant pour effet de rendre la rotation du pied possible.

La partie de l'articulation fixée à la coque et permettant le verrouillage des pieds est composée d'un anneau comprenant deux logements différents 23 et 24.

Le logement 23 peu profond et peu marqué est sollicité pour un verrouillage léger de l'articulation lorsque les pieds sont repliés.

Le logement 24, profond et bien marqué, est employé lorsque les pieds sont dépliés, en configuration de fonctionnement du grille-pain. Dans cette position l'ergot de verrouillage 20 remplit complètement ledit logement 24 ce qui permet un verrouillage franc de l'articulation et évite un repliement accidentel des pieds.

Lorsque un utilisateur veut se servir du grille-pain, celui-ci étant en configuration repliée, il effectue une légère pression sur les languettes de déverrouillage 21 placées à proximité des articulations 7 de manière à débloquer l'ergot de verrouillage 20 du logement 23 et effectue le pivotement d'un ensemble de pieds puis de l'autre. Après une rotation voisine de 180° vers l'extérieur du grille-pain les deux ensembles s'arrêtent en bout de course, les ergots de verrouillage 20 pénétrant dans les logements 24 portés par chaque articulation 7 pour bloquer ainsi les pieds.

Consécutivement à la rotation de l'ensemble de pieds 35, le bouton de commande 4 est libéré et le grille-pain peut fonctionner.

Lorsque l'utilisateur veut ranger l'appareil le déverrouillage des pieds est réalisé de la même manière par pression sur la languette souple de déverrouillage 21 reliée à l'ergot de verrouillage 20. Ceci a pour effet de faire sortir ledit ergot 20 du logement 24 et permettre la rotation des pieds. Le repliement des ensembles de pieds 35, 36 au-dessus du grille-pain est réalisé par pivotement, l'élément de liaison 10, en se positionnant sous le bouton de commande 4, bloque sa course et donc la mise en chauffe de l'appareil dans cette configuration.

Les matériaux constitutifs des pieds repliables du grille-pain peuvent être variés, avantageusement ils seront issus de moulage plastique pour des raisons de coût et de légèreté.

Plusieurs variantes de pieds repliables pour un grille-pain à sortie des aliments grillés par le bas sont possibles, il peut notamment être envisagé des pieds de différentes formes et dimensions, des jambes de longueurs plus ou moins importantes et constituées de matériaux divers. Les éléments de liaison peuvent être plus ou moins larges et conformés de diverses manières suivant des fonctions complémentaires souhaitées.

Il peut aussi être envisagé, sans sortir du cadre de l'invention, de prévoir un ensemble de pieds 35, 36 comprenant des fixations pour une plaque amovible pouvant servir de réceptacle pour les tranches grillées en configuration dépliée de fonctionnement, laquelle plaque étant également utilisable pour la couverture complète de l'ouverture 3 du grille-pain en configuration repliée.

Il peut également être envisagé différents dispositifs de blocage du bouton de commande et une conformation différente de l'élément de liaison formant contrepartie sans sortir du cadre de l'invention. Les éléments de liaison portés par les ensembles de pieds peuvent être positionnés à différentes hauteurs, entre les assises comme cela est décrit précédemment ou plus haut sur les jambes 15 et selon différentes variantes entre les ensembles de pieds.

Le mécanisme de verrouillage des pieds, interne aux articulations, peut aussi être configuré différemment, ledit mécanisme peut également être envisagé seulement sur quelques pieds et non sur tous, sans sortir du cadre de l'invention.

Une autre variante importante de l'invention consiste à conformer l'ensemble de pieds 35 pour la protection du bouton de réglage de puissance, et/ou des organes de contrôle, positionné en 14, par exemple au moyen de jambes 15 plus larges et conformées pour s'agencer avec la forme de ce bouton. Un tel dispositif présenterait une fonctionnalité de protection supplémentaire pour le rangement du grille-pain.

Il peut aussi être imaginé d'ajouter un deuxième élément reliant les jambes 15, disposant d'une surface concave en son milieu, du côté de l'organe de commande pour le protéger des chocs lorsque le grille-pain est en position repliée de rangement, sans sortir du cadre de l'invention.

Dans la description précédente les ensembles de pieds 35 et 36 sont constitués au moyen de l'élément de liaison 10 reliant les assises 8 et 9 et de l'élément 13 reliant les assises 11 et 12. Sans sortir du cadre de l'invention il peut être imaginé de relier les assises 8 et 12 entre elles, et 9 et 11, pour former des ensembles de pieds pivotant également à 180° vers l'extérieur du grille-pain, autour d'articulations positionnées différemment. Le blocage du bouton de commande 4 pouvant être réalisé dans cette nouvelle configuration par une conformation adaptée des assises 8 et 9 opérant en synergie.

Il est bien précisé que la réalisation des éléments de liaison ne sont qu'une variante avantageuse de mise en oeuvre de l'invention, les quatre pieds pouvant être indépendants les uns des autres. Les protections quant au fonctionnement du grille-pain seront alors adaptées en conséquence à cette réalisation.

Bien entendu, l'invention n'est pas limitée aux modes de réalisation décrits et représentés à titre d'exemples, mais elle comprend aussi tous les équivalents techniques ainsi que leurs combinaisons.

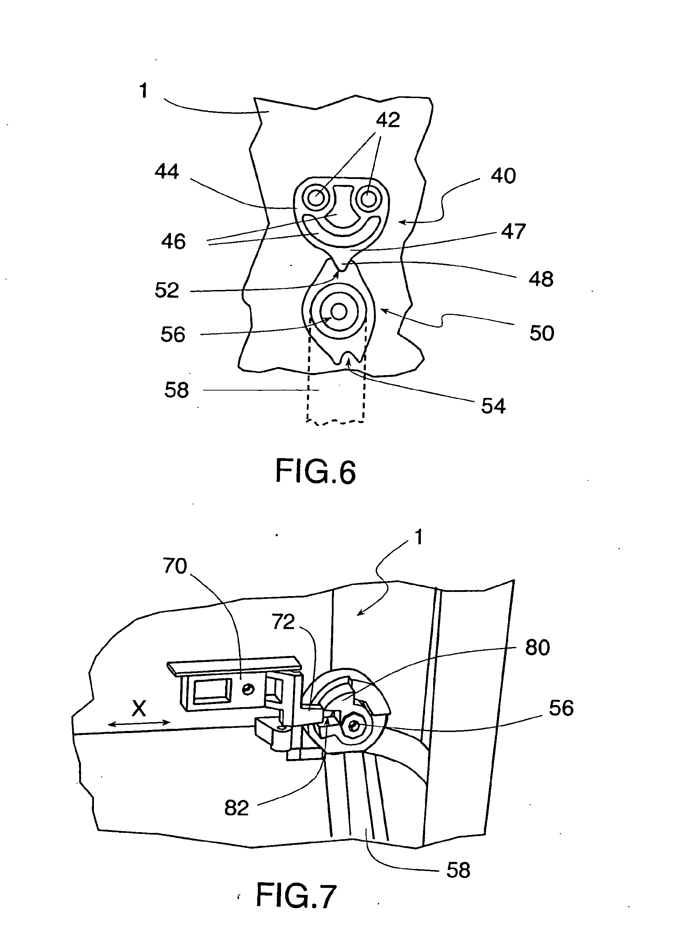

Les figures 6 et 7 présentent notamment des variantes différentes de réalisation de l'articulation des pieds sur le bâti du grille-pain. Ainsi, figure 6, un anneau 40 est fixé sur une partie fixe et rigide du grille-pain, tel le bâti ou le boîtier 1, par deux vis ou rivets 42. L'exemple proposé montre un dispositif maintenu sur le boîtier 1.

Le boîtier comprend également un alésage destiné au guidage en rotation de l'axe 56 du pied 58 par rapport au boîtier 1. Le pied 58 est présenté sommairement en pointillés.

L'anneau 40 comporte, outre la partie rigide 44 pour sa fixation, des parties évidées 46 formant une lame de matière 47 ayant une fonction de ressort, ladite lame faisant partie intégrante de l'anneau, cette lame de matière disposant d'un bossage 48 formant verrou.

Ce verrou est en prise avec l'une des deux gorges 52, 54 d'une came 50, solidaire de l'axe 56 du pied 58 et positionnée dans le plan de l'anneau 40. Les deux gorges sont positionnées sur le périmètre de la came, chaque position du verrou dans l'une des gorges correspondant à une position stable du pied.

La fonction principale de l'anneau est alors d'assurer une pression du verrou sur la came.

Ainsi, lorsque le pied est en butée, le verrou 48, sous l'effet du ressort d'anneau 47, applique une force axiale sur l'une des gorges 52, 54 de la came. La pente de la came au niveau du contact avec le verrou génère une composante radiale de la force qui s'oppose à la rotation du pied. Cette force est dimensionnée de manière à assurer la stabilité des pieds lors de l'utilisation du produit ou en position de rangement.

Lors du changement de position du pied, une force supérieure à la force utile d'usage est appliquée au pied. La rotation de la came fait reculer le verrou par l'élasticité de la lame ressort 47. Après que le verrou soit sorti de la gorge, la rotation du pied est libre jusqu'à atteindre la position opposée.

L'anneau 40 est avantageusement réalisé en plastique. Une variante est constituée par le remplacement du ressort plastique intégré à l'anneau par une lame ressort indépendante rapportée sur l'anneau.

Une autre variante est constituée par l'ajout au ressort plastique intégré à l'anneau d'une lame ressort indépendante rapportée sur l'anneau. Cette solution permet d'augmenter et / ou d'ajuster la force de pression de l'anneau sur la came.

Ces variantes de réalisation permettent un blocage en rotation des pieds du grille-pain, avec un point dur suffisamment marqué pour assurer la stabilité du produit lors de son utilisation normale, tout en offrant un déblocage des pieds par simple forçage manuel en rotation desdits pieds.

La forme des pièces, les matières utilisées, et l'absence de pièces en mouvement permettent d'assurer une durée de vie suffisante.

Le faible nombre de pièces garantit un coût de réalisation minimisé et un assemblage aisé.

En complément de ces variantes de réalisation, il est possible d'ajouter un joint de friction encastré entre l'axe du pied et le boîtier (ou le bâti), permettant de présenter un couple de friction de l'ordre de 1 N.m afin d'améliorer la stabilité des pieds.

Selon un autre dispositif décrit en variante de réalisation du maintien des pieds, et tel qu'illustré figure 7, montrant un pied et sa connexion à l'intérieur du grille-pain, certaines articulations des pieds 58 peuvent comporter, autour de l'axe de rotation 56, un secteur 80, solidaire dudit pied et comportant une encoche 82. Un loquet 70 coulissant selon la direction X, monté sur le boîtier du grille-pain et accessible de l'extérieur du boîtier par l'utilisateur, comporte un doigt 72 susceptible de venir dans l'encoche 82 afin de bloquer la rotation du pied. Un dispositif permet de maintenir le loquet dans cette position, soit par la force d'un ressort, soit par franchissement d'un point dur, soit par un autre moyen connu en soi.

Selon cette variante, il est également possible de disposer d'un joint de friction tel que précédemment décrit.

## Revendications

1. Grille-pain comprenant un boîtier (1) ledit boîtier contenant un bâti formant notamment une chambre de grillage verticale, ladite chambre et ledit boîtier (1) étant ouverts, d'une part dans la partie supérieure du grille-pain, et d'autre part dans la partie inférieure du grille-pain, l'ouverture inférieure du bâti étant obturée par une trappe escamotable, ladite chambre étant munie de moyens de chauffe reliés à un dispositif d'alimentation électrique et de contrôle (14) desdits moyens de chauffe permettant de réaliser un cycle de chauffe, la trappe pouvant être actionnée afin d'évacuer les tranches de pain mises à griller par le bas du grille-pain, ledit grille-pain comportant des pieds (5a, 5b, 6a, 6b) reliés au boîtier (1) du grille-pain, **caractérisé en ce que** ces pieds (5a, 5b, 6a, 6b) sont montés pivotant dans un plan vertical par des articulations (7), afin de pouvoir occuper deux positions stables : une position dépliée de fonctionnement et une position repliée de rangement, les pieds (5a, 5b, 6a, 6b) étant rabattus contre le boîtier de l'appareil en position de rangement et disposant d'au moins un système de verrouillage empêchant la rotation accidentelle des pieds (5a, 5b, 6a, 6b) lorsque le grille-pain est en position dépliée, prêt à fonctionner.

2. Grille-pain selon la revendication précédente, **caractérisé en ce que** les pieds (5a, 5b, 6a, 6b) pivotent vers l'extérieur du grille-pain.

3. Grille-pain selon l'une des revendications précédentes, **caractérisé en ce que** le passage de la configuration dépliée de fonctionnement à la configuration repliée de rangement est effectué par une rotation des pieds (5a, 5b, 6a, 6b) voisine de 180°.

4. Grille-pain selon l'une des revendications précédentes, **caractérisé en ce que** le système de verrouillage, en position dépliée, d'au moins un pied (5a, 5b, 6a, 6b) est incorporé dans l'articulation (7) dudit pied (5a, 5b, 6a, 6b).

5. Grille-pain selon l'une des revendications précédentes, **caractérisé en ce que** chaque pied (5a, 5b, 6a, 6b) est constitué de trois parties : une articulation (7), une jambe (15), une assise (8, 9, 11, 12).

6. Grille-pain selon la revendication précédente, **caractérisé en ce que** les assises (8, 9, 11, 12) des pieds (5a, 5b, 6a, 6b) sont rabattues sur le dessus de l'appareil en position de rangement.

7. Grille-pain selon l'une des revendications précédentes, **caractérisé en ce qu'**il comporte quatre pieds (5a, 5b, 6a, 6b) reliés deux à deux par un élément de liaison (10, 13) de manière à former deux ensembles de pieds pivotants (35, 36).

8. Grille-pain selon l'une des revendications 5 à 7, **caractérisé en ce qu**'il comporte un bouton de commande (4) de l'alimentation électrique des éléments chauffants, et en ce que l'une des parties constitutives d'au moins l'un des pieds (5a, 5b, 6a, 6b) ou l'un des ensembles de pieds (35, 36) est conformée pour interdire la commande de fonctionnement du grille-pain lorsque celui-ci est en configuration repliée de rangement.

9. Grille-pain selon la revendication précédente, **caractérisé en ce que** le bouton de commande (4) comporte une course d'actionnement, au bout de laquelle il commande l'alimentation des éléments chauffants, et **en ce que** l'une des parties constitutives d'au moins l'un des pieds (5a, 5b, 6a, 6b) ou l'un des ensembles de pieds (35, 36) vient empêcher la course complète du bouton (4) lorsque le grille-pain est en configuration repliée de rangement.

10. Grille-pain selon la revendication précédente, **caractérisé en ce que** le bouton de commande (4) est monté sur la face supérieure du boîtier (1) et **en ce que** l'élément de liaison (10, 13) de l'un des ensembles de pieds pivotants (35, 36) est conformé pour venir se positionner sur la course du bouton de commande (4) lorsque le grille-pain est en configuration repliée de rangement.

11. Grille-pain selon l'une des revendications précédentes, **caractérisé en ce qu'**il comprend en outre un moyen de verrouillage des pieds (5a, 5b, 6a, 6b) ou des ensembles de pieds (35, 36) lorsque ces derniers sont en position repliée de rangement.

12. Grille-pain selon la revendication précédente, **caractérisé en ce que** le moyen de verrouillage d'au moins un pied (5a, 5b, 6a, 6b) ou au moins un ensemble de pieds (35, 36) en position repliée de rangement est incorporé dans l'articulation (7) correspondante.

13. Grille-pain selon l'une des revendications précédentes, **caractérisé en ce que** au moins une articulation (7) possède une languette souple de déverrouillage (21) reliée à un ergot de verrouillage (20) actionnable par pression et porté par une jambe (15).

14. Grille-pain selon l'une des revendications 7 à 13, **caractérisé en ce que** les pieds repliables (5a, 5b, 6a, 6b) comprennent un élément de liaison, entre deux pieds formant un ensemble (35, 36), conformé pour protéger les organes de contrôle du grille-pain lorsque celui-ci est en position repliée de rangement.

## Claims

1. A toaster having a housing (1), said housing containing a frame forming, in particular, a vertical toasting chamber, said chamber and said housing (1) being open firstly in the top portion of the toaster and secondly in the bottom portion of the toaster, the bottom opening of the frame being closed off by a retractable trapdoor, said chamber being provided with heater means connected to an arrangement (14) for electrically powering and controlling said heater means, so that it is possible to perform a heating cycle, it being possible for the trapdoor to be actuated in order to remove the slices of toast from the bottom of the toaster, said toaster having legs (5a, 5b, 6a, 6b) connected to the housing (1) of the toaster, said toaster being **characterized in that** said legs (5a, 5b, 6a, 6b) are mounted to pivot in a vertical plane via hinges (7), so that they can take up two stable positions, namely an unfolded position for operation and a folded-away position for stowage, the legs (5a, 5b, 6a, 6b) being folded away against the housing of the appliance in the stowage position and being provided with at least one locking system preventing the legs (5a, 5b, 6a, 6b) from pivoting accidentally when the toaster is in the unfolded position, ready to operate.

2. A toaster according to the preceding claim, **characterized in that** the legs (5a, 5b, 6a, 6b) pivot towards the outside of the toaster.

3. A toaster according to any preceding claim, **characterized in that** conversion from the unfolded configuration for operation to the folded-away configuration for stowage is achieved by pivoting the legs (5a, 5b, 6a, 6b) through about 180°.

4. A toaster according to any preceding claim, **characterized in that** the locking system for locking at least one leg (5a, 5b, 6a, 6b) in the unfolded position is incorporated in the hinge (7) of said leg (5a, 5b, 6a, 6b).

5. A toaster according to any preceding claim, **characterized in that** each leg (5a, 5b, 6a, 6b) is made up of three portions, namely a hinge (7), an upright (15), and a base (8, 9, 11, 12).

6. A toaster according to the preceding claim, **characterized in that** the bases (8, 9, 11, 12) of the legs (5a, 5b, 6a, 6b) are folded away onto the top of the appliance in the stowage position.

7. A toaster according to any preceding claim, **characterized in that** it has four legs (5a, 5b, 6a, 6b) interconnected in pairs by respective link elements (10, 13) so as to form two pivotally mounted leg assemblies (35, 36).

8. A toaster according to any one of claims 5 to 7, **characterized in that** it has a control button (4) for controlling the electrical power supply to the heater elements, and **in that** one of the component portions of at least one of the legs (5a, 5b, 6a, 6b) or one of the leg assemblies (35, 36) is shaped to prevent the toaster from being caused to operate by the control button when said toaster is in the folded-away position for stowage.

9. A toaster according to the preceding claim, **characterized in that** the control button (4) has an actuating stroke at the end of which it causes the heater elements to be powered, and **in that** the component portions of at least one of the legs (5a, 5b, 6a, 6b) or one of the leg assemblies (35, 36) comes to prevent the button (4) from traveling over its entire stroke when the toaster is in the folded-away configuration for stowage.

10. A toaster according to the preceding claim, **characterized in that** the control button (4) is mounted on the top face of the housing (1), and **in that** the link element (10, 13) of one of the pivotally mounted leg assemblies (35, 36) is shaped to come to be positioned on the stroke of the control button (4) when the toaster is in the folded-away configuration for stowage.

11. A toaster according to any preceding claim, **characterized in that** it also has means for locking the legs (5a, 5b, 6a, 6b) or the leg assemblies (35, 36) when they are in the folded-away position for stowage.

12. A toaster according to the preceding claim, **characterized in that** the means for locking at least one leg (5a, 5b, 6a, 6b) or at least one leg assembly (35, 36) in the folded-away position for stowage are incorporated into the corresponding hinge (7).

13. A toaster according to any preceding claim, **characterized in that** at least one hinge (7) has a flexible unlocking tongue (21) connected to a locking lug (20) that is suitable for being actuated by pressing and that is carried by an upright (15).

14. A toaster according to any one of claims 7 to 13, **characterized in that** the fold-away legs (5a, 5b, 6a, 6b) include a link element between two legs forming an assembly (35, 36), which link element is shaped to protect the control members of the toaster when said toaster is in the folded-away position for stowage.

## Patentansprüche

1. Toaster mit einem Gehäuse (1), wobei das Gehäuse ein Gestell aufweist, das insbesondere eine vertikale Grillkammer bildet, wobei die Kammer und das Gehäuse (1) einerseits im oberen Teil des Toasters und andererseits im unteren Teil des Toasters offen sind, wobei die untere Öffnung des Gestells durch eine einziehbare Klappe verschlossen ist, wobei die Kammer mit Heizmitteln versehen ist, die mit einer elektrischen Vorrichtung zum Versorgen und Kontrollieren (14) der Heizmittel verbunden sind , mit welchen ein Heizzyklus durchgeführt werden kann, wobei die Klappe betätigt werden kann, um die im Toaster gerösteten Brotscheiben durch die Unterseite des Toasters zu entfernen, wobei der Toaster Füße (5a, 5b, 6a, 6b) aufweist, die mit dem Gehäuse (1) des Toasters verbunden sind, **dadurch gekennzeichnet, dass** diese Füße (5a, 5b, 6a, 6b) in einer vertikalen Ebene über Gelenke (7) schwenkend angebracht sind, um zwei stabile Positionen, nämlich eine ausgeklappte Betriebsposition und eine zusammengeklappte Aufbewahrungsposition einnehmen zu können, wobei die Füße (5a, 5b, 6a, 6b) in der Aufbewahrungsposition gegen das Gehäuse umgeklappt sind und über mindestens ein Verriegelungssystem verfügen, die eine ungewollte Drehung der Füße (5a, 5b, 6a, 6b) verhindert, wenn der Toaster betriebsbereit in der ausgeklappten Position ist.

2. Toaster nach dem vorangehenden Anspruch, **dadurch gekennzeichnet, dass** die Füße (5a, 5b, 6a, 6b) zur Außenseite des Toaster schwenken.

3. Toaster nach einem der vorhergehenden Ansprüche, **dadurch gekennzeichnet, dass** der Übergang zwischen dem ausgeklappten Betriebszustand und dem zusammengeklappten Aufbewahrungszustand über eine um annähernd 180°-Drehung der Füße (5a, 5b, 6a, 6b) erfolgt.

4. Toaster nach einem der vorhergehenden Ansprüche, **dadurch gekennzeichnet, dass** das System zum Verriegeln mindestens eines Fußes (5a, 5b, 6a, 6b) in der ausgeklappten Position im Gelenk (7) des Fußes (5a, 5b, 6a, 6b) eingebaut ist.

5. Toaster nach einem der vorhergehenden Ansprüche, **dadurch gekennzeichnet, dass** jeder Fuß (5a, 5b, 6a, 6b) aus drei Teilen besteht : einem Gelenk (7), einem Bein (15), einer Standfläche (8, 9, 11, 12).

6. Toaster nach dem vorhergehenden Anspruch, **dadurch gekennzeichnet, dass** die Standflächen (8, 9, 11, 12) der Füße (5a, 5b, 6a, 6b) in der Aufbewahrungsposition über dem Gerät zusammengeklappt sind.

7. Toaster nach einem der vorhergehenden Ansprüche, **dadurch gekennzeichnet, dass** er vier Füße (5a, 5b, 6a, 6b) aufweist, die paarweise über ein Verbindungselement (10, 13) verbunden sind, so dass zwei Baugruppen (35, 36) von schwenkbaren Füßen gebildet werden.

8. Toaster nach einem der Ansprüche 5 bis 7, **dadurch gekennzeichnet, dass** er einen Knopf (4) zum Betätigen der elektrischen Versorgung der Heizelemente aufweist und dass einer der Bestandteile mindestens eines Fußes (5a, 5b, 6a, 6b) oder einer der Fuß-Baugruppen (35, 36) so gebildet ist, dass die Betätigung des Toasters verhindert wird, wenn dieser im zusammengeklappten Aufbewahrungszustand ist.

9. Toaster nach dem vorhergehenden Anspruch, **dadurch gekennzeichnet, dass** der Betätigungsknopf (4) einen Betätigungsweg aufweist, an dessen Ende er die Versorgung der Heizelemente betätigt, und dass einer der Bestandteile mindestens eines der Füße (5a, 5b, 6a, 6b) oder einer der Fuß-Baugruppen (35, 36) den vollständigen Weg des Knopfs (4) verhindert, wenn der Toaster im zusammengeklappten Aufbewahrungszustand ist.

10. Toaster nach dem vorhergehenden Anspruch, **dadurch gekennzeichnet, dass** der Betätigungsknopf (4) auf der Oberseite des Gehäuses (1) angebracht ist und das Verbindungselement (10, 13) einer der Baugruppen (35, 36) der schwenkbaren Füße so gebildet ist, dass es sich auf dem Weg des Betätigungsknopfs (4) positioniert, wenn der Toaster im zusammengeklappten Aufbewahrungszustand ist.

11. Toaster nach einem der vorhergehenden Ansprüche, **dadurch gekennzeichnet, dass** er zudem ein Mittel zum Verriegeln der Füße (5a, 5b, 6a, 6b) oder der Fuß-Baugruppen (35, 36) aufweist, wenn diese im zusammengeklappten Aufbewahrungszustand sind.

12. Toaster nach dem vorhergehenden Anspruch, **dadurch gekennzeichnet, dass** das Mittel zum Verriegeln mindestens eines Fußes (5a, 5b, 6a, 6b) oder mindestens einer Fuß-Baugruppe (35, 36) im zusammengeklappten Aufbewahrungszustand im entsprechenden Gelenk (7) eingebaut ist.

13. Toaster nach einem der vorhergehenden Ansprüche, **dadurch gekennzeichnet, dass** mindestens ein Gelenk (7) eine nachgiebige Entriegelungszunge (21) aufweist, die mit einer druckbetätigbaren und von einem Bein (15) getragenen Verriegelungsnase (20) verbunden ist.

14. Toaster nach einem der Ansprüche 7 bis 13, **dadurch gekennzeichnet, dass** die zusammenklappbaren Füße (5a, 5b, 6a, 6b) ein Verbindungselement zwischen zwei, eine Baugruppe (35, 36) bildenden Füßen umfassen, das so gebildet ist, dass es die Organe zum Kontrollieren des Toasters schützt, wenn dieser im zusammengeklappten Aufbewahrungszustand ist.
